# EUROPEAN PATENT SPECIFICATION

(11) **EP 3 244 078 B1**
(45) Date of publication and mention of the grant of the patent: **06.05.2020**
(21) Application number: 16169579.6
(22) Date of filing: 13.05.2016
(51) Int. Cl.: F16B 39/30, F16B 31/02, F16B 33/02, F16B 33/04

(54) **A THREADING INDICATING BOLT**
GEWINDEANZEIGEBOLZEN
BOULON À INDICATION DE FILETAGE

(43) Date of publication of application: 15.11.2017
(73) Proprietor: Bulten AB, 400 93 Göteborg (SE)
(72) Inventor: Spolander, Erik, 418 77 GÖTEBORG (SE)
(74) Representative: AWA Sweden AB

(56) References cited:
- DE-A1- 3 011 820
- DE-C1- 3 219 264
- DE-U1- 8 319 036
- US-A- 2 371 365
- US-A- 3 664 400

## Description

### Technical field

The present invention generally relates to threading indicating for a bolt, to a threading indicating system comprising a bolt and a nut, and to a method for assembling a bolted joint.

### Background art

A core property for defining the strength and load bearing capacity of a bolted joint is the axial tensile force in the bolt and the corresponding axial tensile force in the nut. The axial tensile force in the bolted joint must be above a predetermined force such that a secure bolted joint is achieved. If the axial tensile force in the bolted joint is insufficient, the bolt runs a risk of becoming loose or damaged which may result in a failure of the bolted joint. Failure of a bolted joint may result in catastrophic damage to the structure secured by the bolted joint. If the object being secured is a person: damage, injury or death may result from a failed bolted joint.

A core property for a securely assembled bolted joint is the clamp force. The clamp force is the force the bolt and the nut of the bolted joint exert on a body arranged between the two. If the clamp force is not sufficient the frictional forces between the bolt/nut and the body may be too low to prevent the body from moving. Such movement may result in large shearing forces on the bolt which may result in that the bolt shears off. The clamp force may be derived from the axial tensile force in the bolted joint.

The axial tensile force in a bolted joint may be expressed as a function of an applied bolt torque. When a bolted joint comprising a nut and a bolt is assembled the nut is threaded onto the bolt until a snug fit is achieved in the bolted joint. Thereafter a torque is applied to the tool receiving portions of the nut and the bolt and the joint is torqued until the nut and the bolt are securely joined together in a bolted joint.

A plurality of methods for assembling a bolted joint exists. The previously discussed method for assembling a bolted joint is the so called torque control, wherein a torque is applied until it reaches a threshold value. However, using a torque control method may result in that the assembled bolted joint is not secure. When threading the bolt to a nut, interference, due to imperfect threads or particles between the threads of the bolt and the nut, may result in a large tool torque. If torque control is used for determining if the bolted joint is securely assembled the interference may result in that the tool falsely indicates that the bolted joint is securely assembled. If the bolted joint forms part of a seat belt assembly, forming a point for securing the seat belt to the chassis of a vehicle an incorrectly assembled bolted joint may cause serious injure in a crash event, due to the bolted joint failing.

Hence, there is still a desire to improve the state of the art to provide a secure bolted joint and a method for assembling a secure bolted joint which at least partly solves these problems.

A bolt with a mechanical threading indicating element is known from DE 30 11 820 A1.

### Summary of the invention

It is an object of the present invention to improve the current state of the art, and to solve, or at least mitigate, some of the above problems. These and other objects are achieved by a bolt, a system and a method as defined in the accompanying claims.

According to a first aspect of the present invention a threading indicating bolt is provided, the bolt comprising: a geometrical central axis defining an axial direction; a shank and a head, the head defining a trailing end and the shank defining a leading end of the bolt, the shank comprising a threaded trailing portion having a thread pitch, and a threaded leading portion, the threaded leading portion having a thread start, wherein the threaded leading portion extends in the axial direction from the thread start to the threaded trailing portion for a length being three times the thread pitch of the threads of the trailing portion; and wherein a torque is needed to thread a matching nut onto said bolt; the threaded leading portion of the bolt comprising a mechanical threading indicating element adapted to increase the torque needed to thread a matching nut onto the bolt while said matching nut is in threaded engagement with the mechanical threading indicating element arranged on the threaded leading portion of the bolt; the increase of the torque being in comparison to a required run-down torque when the matching nut has been threaded onto the bolt past the threaded leading portion and onto the threaded trailing portion. The invention is based on the realization that a more secure bolted joint may be made using a bolt comprising a mechanical threading indicating element, for indicating a point for measuring an angle from. The measured angle may then be used for determining if the bolted joint is securely assembled, by determining if the measured angle is within an angle range. The invention thereby reduces the risk that the bolted joint is incorrectly assembled.

The bolt is provided with a head and a shank revolving around a geometrical central axis defining an axial direction of the bolt. When the bolt forms part of a bolted joint with a nut the head exerts a force on a body arranged between the bolt head and the nut. The bolt may also be used with a threaded female member. The head is arranged with a tool engaging portion or interface, such that a tool may engage the tool engaging portion and exert a rotational and turning force adapted to turn the bolt around a central axis of said bolt. The tool may thus be said to exert a torque on the bolt thereby driving the bolt such that it threads into a female threaded member.

The shank has a cylindrical shape and at least a portion of the shank is threaded, thereby comprising a thread. The shank is defining a leading end of the bolt, e.g. the end of the bolt adapted to be inserted to a female threaded member. The head of the bolt is defining a trailing end of the bolt. The shank of the bolt comprises a trailing threaded portion and a leading threaded portion. The threads of the trailing threaded portion and the threads of the leading threaded portion have a respective thread pitch. The respective threads may have the same pitch or may have different pitches. The thread and the diameter of the shank of the bolt are arranged corresponding to a thread standard and a thread size. For instance a bolt having an Isometric M10 size thread has clearly defined thread parameters such as nominal diameter, thread pitch and thread shape to name a few of said parameters. An Isometric M10 sized bolt is adapted to cooperate with a female threaded member having matching thread properties. Naturally, an M10 bolt is not able to threadingly cooperate with an M8 nut due to non-matching thread properties.

The threaded leading portion comprises a thread start, e.g. a starting point for threading a female threaded member, such as a bolt, from.

The thread start of the leading threaded portion may be arranged at the leading end of the bolt or it may be arranged at a distance from the leading end of the bolt. In other words a part of the bolt, may be arranged not comprising a thread, and the thread start may be arranged at a distance from the leading end.

The threaded leading portion has an axial length being three times the thread pitch of the threads of the trailing portion. A rule of thumb when dimensioning and designing bolted joints using bolt and a female threaded member, such as a nut, is that the first three turns of the threads of the bolt, from the thread start towards the head of the bolt, are not to be loaded or exerted to forces when the bolted joint is assembled. The threaded leading portion may be said to comprise "incomplete threads". Hence the thread properties of the threaded leading portion may be altered slightly without affecting the security of a bolted joint comprising the bolt according to the present invention.

The torque needed to thread a matching nut onto the bolt, when the bolt and nut are unloaded, and in other words not exerting a clamping force on a body arranged between the nut and bolt, may be referred to as a run-down torque, run in torque, or run-on torque. The run-down torque may also be referred to as the torque needed to run a nut down the shank of a bolt, towards the head of the bolt. Hence a torque is needed to thread the matching nut to the bolt. The run-down torque does not include the torque needed for the final tightening of the bolted joint. Naturally the torque is a variable that may vary depending on various parameters. However, in the ideal case when the nut is threaded onto a matching bolt, and the thread surfaces are well lubricated and free from particles and dirt, there is none to very small resistance resulting in that a very low and constant run-down torque is needed to thread the nut onto the bolt. When the nut has been threaded onto the bolt and the clamping force is starting to build up the run-down torque is increased as axial forces build up in the bolt and the nut.

The inventive bolt is provided with a mechanical threading indicating element. The mechanical threading indicating element is adapted to increase the run-down torque when a female threaded member such as a nut is being threaded onto the bolt and the nut is in threaded contact with the mechanical threading indicating element. By "mechanical" is meant that the threading indicating element is comprised in the bolt, and may in other words be said to be a part of the bolt, made in the same material as the bolt. Hence, the mechanical threading indicating element may be formed when the bolt is being manufactured by cold forging. It may be manufactured when the threads of the bolt are being rolled. The mechanical threading indicating element may also be said to be formed from the same blank the bolt is cold forged from.

The mechanical threading indicating element may also be said to be a mechanical thread friction increasing means, adapted to increase the friction between the mechanical thread friction increasing means and a matching nut or female threaded member being threaded onto the bolt, thereby at least temporarily increasing the run-down torque. The mechanical threading indicating element is arranged on the threaded leading portion of the bolt such that the increase in run-down torque only occurs when the nut or female threaded member is in threaded contact with the threaded leading portion of the bolt. Hence, when the nut is threaded past the threaded leading portion onto the threaded trailing portion a decrease in run-down torque will occur. Such an arrangement is advantageous in that the mechanical threading indicating element is not engaged when the bolt has been tightened. Both the run-down torque increase and decrease may be detected.

The increase in run-down torque may be detected by a torque sensor, or by measuring the torque applied by the tool driving the bolt or nut. If the increase is above a predetermined threshold value the increase may be used as a starting point for counting or measuring an angle of rotation, or rotational angle, from. Such an angle may be measured in degrees and may be larger than 360°. In order to determine if the increased run-down torque is above a predetermined threshold the increased run-down torque may be compared to the run-down torque needed for threading the nut onto the bolt, when the nut is determined to have been threaded past the threaded leading portion. In such a case both an increase and a decrease in run-down torque may be used for counting or measuring an angle from.

The mechanical threading indicating element is a change of at least one thread property of at least a portion of one thread turn of the threads of the leading portion of the bolt. The mechanical threading indicating element is arranged such that it results in a clear and detectable run-down torque increase, and at the same time does not result in an unwontedly large run-down torque increase such that the threads of the bolt or nut are plastically and permanently deformed.

According to at least one exemplary embodiment of the present invention the mechanical threading indicating element is a partial deformation of at least a portion of at least one thread turn of the thread of said leading portion. A deformation may for instance be a deformation to a thread crest, a deformation making the distance between two adjacent thread crest smaller than the corresponding distance according to the thread standard. The partial deformation increases the interference between a thread on the nut and partial deformation of the thread resulting in an increased frictional force. Thus, an increased run-down torque is needed to thread the bolt to a nut and said increased run-down torque is detectable and indicate a starting point for counting or measuring and angle from.

According to the invention, the change of at least one thread property is at least a thread depth. According to at least one exemplary embodiment of the present invention the change of at least one thread property further includes at least one of the following thread properties: a thread angle, a pitch, a lead, a major diameter, a minor diameter, a top radius, or a bottom radius. The change in thread property may be a change to a single thread property, or it may be a combination of changes to a plurality of thread properties. As an example changing one thread property may indirectly change an additional thread property. The combination achieved when changing more than one thread property allows for customization of the run-down torque increased depending on the application of the bolt.

According to at least one exemplary embodiment the mechanical threading indicating element is arranged on at least a portion of the third thread turn of the bolt counting from said thread start of said threaded leading portion. When the mechanical threading indicating element is arranged on at least a portion of the third thread turn of the bolt the mechanical threading indicating element is not in contact when the bolt is used in a bolted joint. This is due to the rule of thumb that the first three thread turns of a bolt comprise "incomplete threads" not arranged to support load.

Advantageously the run-down torque increase due to the mechanical threading indicating element is a factor times a normal, nominal, run-down torque needed to thread a standard nut to a matching bolt. Such a mechanical threading indicating element is advantageous in that a system using the bolt for indicating a starting point for counting or measuring an angle from, may be setup by only inputting the factor value. The factor may be a value or a range of values. The torquing tool may then only need to detect when the run-down torque is above the inputted range value for determining the starting point for counting or measuring the angle from. Such a system reduces the risk for errors linked to when an operator needs to input a plurality of variables when setting up the torque tool.

According to at least one exemplary embodiment of the present invention the mechanical threading indicating element comprises an altered thread pitch of at least a portion of the thread of the leading portion. Altering the thread pitch of at least a portion of the thread of the leading portion will result in a slight interference when a nut is threaded onto the leading portion. The slightly larger interference will result in lager frictional forces and an increased run-down torque is needed to thread the nut past the threaded leading portion. A change in thread pitch of at least a portion of the threaded leading portion may be done when the threads are rolled thus not needing any additional manufacturing steps as compared to a standard bolt. Once the nut is threaded past the threaded leading portion the run-down torque will decrease and be essentially equal to the run-down torque needed for threading a standard nut to a matching standard bolt.

According to a second aspect of the present invention a threading indicating system is provided, the system comprising a threaded bolt according to the first aspect of the invention, and a matching threaded nut, the system characterized in that: a first torque is required when the nut is threading onto the threaded trailing portion; and the mechanical threading indicating element is a torque increasing element; and wherein a second torque is required when the nut is threading onto the threaded leading portion bolt and the nut is in threaded contact with the torque increasing element; and wherein the second torque is larger than the first torque. The system comprises a bolt comprising a mechanical threading indicating element in the form of a torque increasing element. When the nut is being threaded onto the trailing threaded portion of the bolt a first torque is required. A second torque is required when the nut is threaded onto the bolt and is determined to be in threaded contact with the torque increasing element. Hence, the increase in torque when the nut is coming into contact with the torque increasing element may be detected. Additionally the decrease in torque when the nut is coming out of contact with the torque increasing element may be detected. The second torque due to the torque increasing element is larger than the first torque.

According to at least one embodiment of the present invention the run-down torque is decreased when said nut is threaded past said leading portion, and is determined not to be in threaded contact with said threads of said leading portion of said bolt. When the run-down torque decreases when the nut is threaded past the leading portion, the decrease in run-down torque may be detected and a starting point for counting or measuring an angle from may be determined.

According to a third aspect of the present invention there is provided a method for assembling a bolted joint, the bolted joint comprising a bolt according to the first aspect and a matching nut. The method comprises the steps of: detecting a change in run-down torque when threading said bolt to said nut, said change in run-down torque being above a predetermined threshold value and due to said mechanical threading indicating element, determining, based on the step of detecting said change in run-down torque, a starting point for measuring an angle from; and assembling said bolted joint by applying a torque and performing one of the method steps A and B: A. torquing said nut to said bolt until said measured angle is within an angle range; and B. torquing said nut to said bolt until said applied torque is above a predetermined torque threshold value and said measured angle is within an angle range; wherein said angle being within said angle range is indicative that said bolted joint is securely assembled. The method for assembling a bolt comprising a mechanical threading indicating element and a matching nut comprises the step of detecting a change in run-down torque when the nut is threaded onto the bolt and the change in run-down torque is due to the nut coming in threaded contact with the mechanical threading indicating element. The change in run-down torque may be an increase or a decrease. Further the change in run-down torque may be an increase followed by a subsequent decrease. The detected change in run-down torque may be compared to a threshold value and if the run-down torque is above the threshold value a starting point for counting or measuring an angle from may be determined. Hence, the step of determining the starting point is based on the comparison of the change in run-down torque to the predetermined threshold value. After determining the starting point the bolted joint may be assembled by further applying a torque preferably by using a torque tool such as an impact wrench. In addition to assembling the bolted joint by a torque tool one of the following steps is additionally performed: torquing the bolted joint until the counted or measured angle is within an angle range; or torquing the bolted joint until the applied torque is above a threshold value, or within a torque threshold range, and the counted or measured angle is within an angle range and the angle being within said angle range is indicative that the bolted joint is securely assembled. Hence, the bolted joint may be assembled by torquing the bolt and joint until the angle is within an angle range. The angle range is then indicative of both the position and indirectly the axial forces of the bolt and nut, and thus also the torque of the bolted joint. For example if the angle range is determined to be 7.5-8 revolutions or 2700° - 2880°, the bolt and nut may be threaded until the counted or measured angle is within the 2700° - 2880°. Once within the range the bolted joint may be concluded to be securely assembled.

Alternatively the bolt and nut may be torqued until a predetermined tool torque is achieved or the tool torque is within a torque range. The counted or measured angle may thereafter be compared to a predetermined angle range or angle value and if the measured angle is within the angle range or above the angle range, it may be determined that the bolted joint is securely assembled.

According to at least one embodiment of the third aspect the method further comprises the steps of: comparing said measured angle to said predetermined angle range, and based on said comparison and if said measured angle is within said angle range: determining that said bolted joint is securely assembled. Advantageously the measured or counted angle may be used for checking/controlling that the bolted joint is securely assembled.

According to at least one exemplary embodiment of the third aspect the method further comprises the steps of: if said measured angle is determined to not be within said predetermined angle range: determining that said bolted joint is not securely assembled; and indicating to an operator that the bolted joint is not securely assembled. Advantageously if the measured or counted angle is determined to not be within the angle range or above an angle value the bolted joint may be determined to not be securely assembled and an indication may be done to the operator of the tool. Such and indication may be done using sound, or by displaying an indication on a display or using indication lights. The indication may also be done by controlling the tool itself by controlling the torque motor of the tool. For instance the tool may rapidly switch from threading the bolt onto the nut to unthreading the bolt from the nut. Indicating to the operator of the tool that the bolted joint is not securely assembled increases the manufacturing security.

The step of detecting a change in run-down torque comprises detecting an increase in run-down torque resulting from the nut threadingly engaging the mechanical threading indicating element of the bolt, or a decrease in run-down torque resulting from the nut threadingly disengaging the mechanical threading indicating element of the bolt, when the nut is threading onto the bolt. Advantageously the change in run-down torque may be an increase or a decrease both being detectable using the present invention. Hence the starting point for counting or measuring and angle from may be determined based on detecting the increase or decrease in run-down torque or a combination of the increase and decrease in run-down torque.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present inventive concept, will be more fully appreciated by reference to the following illustrative and non-limiting detailed description of preferred embodiments of the present inventive concept, when taken in conjunction with the accompanying drawings, wherein:
Fig.1a shows a schematic graph of the torque as a function of rotation angle, when threading a standard nut to a bolt; of a nut and bolt joint;
Fig. 1b shows a schematic graph for the torque as a function of rotation angle, when threading a standard nut to a bolt comprising a thread locking patch;
Fig. 2 shows a schematic graph for the torque as a function of rotation angle, when treading a nut to a bolt comprising a mechanical threading indicating element according to at least one embodiment of the present invention;
Fig. 3a shows a bolt comprising a mechanical threading indicating element in the form of an altered pitch
Fig. 3b shows a bolt comprising a mechanical threading indicating element in the form of a partly deformed thread
Fig. 3c shows an enlarged partial view of an area B in Fig. 3b;
Fig. 3d shows a bolt comprising a mechanical threading indicating element in the form of an altered thread depth, or height, according to the invention;
Fig. 3e shows an enlarged partial view of an area C in Fig. 3d;
Figs. 4a-4d show flow charts of a method for assembling a bolted joint, comprising a nut and a bolt, wherein the bolt comprises a mechanical threading indicating element;
Fig. 5 shows a threading indicating system comprising a threaded bolt according to the first aspect of the invention and a matching nut.

All the figures are highly schematic, not necessarily to scale, and they show parts which are appropriate for elucidating the invention, other parts being omitted or merely suggested.

### Detailed description of the drawings

Embodiments of the invention will be described in more detail in the following with reference to the accompanying drawings.

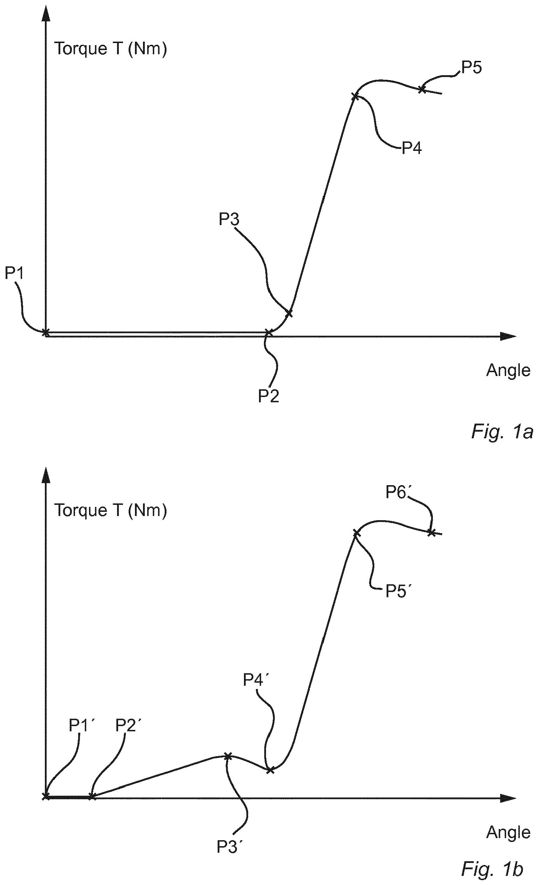

Fig. 1 shows a schematic chart comprising a torque curve for a bolt comprising a mechanical threading indicating element being threaded onto a standard nut. The torque is drawn as a function of a rotation angle α when treading the nut to the bolt. By threading the nut to the bolt, either both the nut and the bolt are counter rotated or one of the nut and the bolt is fixated while the other of the nut and bolt is rotated. The torque is the torque applied by a tool to overcome the friction between the threads of the nut and the bolt in order to thread the nut and bolt together. The chart shows an ideal case when threading between the nut and the bolt where the threads of the two are lubricated in order reduce friction when threading and no initial axial loads are present i.e. the nut and bolt are not exposed to initial axial forces.

The angle α denotes the angle of rotation between the nut and the bolt. Hence one full revolution between the nut and the bolt is 360° or 2π. Naturally in order to assemble a nut and bolt joint a plurality of full rotations is required. Hence the angle is larger than 360°. For example, if seven and a half rotations (7.5) are needed to assemble the bolted joint the resulting angle is 2700°.

In a point P1, the bolt enters the nut. From point P1 to a point P2, no to very low frictional forces are present in the threading contact between the nut and the bolt. Hence, between the points P1 and P2, the torque is constant and approximately 0 Nm. At a point P2, the nut and the bolt have been threaded until contact, direct or indirect, is achieved between the nut, the bolt and the body being clamped between the nut and bolt. After point P2, the resistance from frictional forces in the threads of the nut and the bolt will start to build up and increase as the nut and bolt are rotated. Between point P2 and a point P3, an exponential and non-linear torque increase occurs. After point P3 and before a point P4 a linear torque increase occurs. During this linear torque increase the rotational angle of the nut and bolt will result in increased axial forces in the nut and bolt. The axial forces in turn results in normal forces which in turn results in frictional forces in the threads. Hence increased axial forces result in that an increased torque is needed to be applied in order to tighten the bolted joint. Between points P3 and P4 elastic, and no plastic, deformation is present in the nut, bolt and body being clamped.

At a point P4, the nut and the bolt start to experience plastic deformation due to the axial forces in the two. Hence, point P4 may be referred to as a yield point. Plastic deformation normally occurs in the weaker one of the nut and bolt, preferably designed and dimensioned to be the bolt.

After point P4 where plastic deformation has been initiated, the torque will start to level out. At a point P5, the torque is constant and will start to decrease slightly.

Fig. 1b shows a schematic chart comprising a torque curve when threading a bolt comprising a thread locking patch to a standard nut. A thread locking patch is a self-locking element comprised of nylon permanently bonded onto the threads of a fastener. The purpose of the thread locking patch is to prevent a bolted joint from coming loose by increasing the frictional forces between the nut, the bolt and the patch arranged there between. In other words the thread locking patch functions as a wedge between the bolt and mating nut compressing the patch and creating metal to metal contact on a surface opposite the patch. Hence, the purpose of a thread locking patch is as a means for preventing the bolted joint from coming loose due to, for instance vibrations.

In a point P1', the bolt enters the nut. Between entering the nut in point P1' and a point P2', where the patch comes into contact with the threads of the nut, the torque is constant and approximately 0 Nm. When the patch comes into contact with the threads of the nut the frictional forces, due to the smearing of the patch in the threads of the nut and the bolt, increase approximately linearly. The point P2', indicates that the patch of the bolt has entered the nut. When the patch is smeared between the threads the patch is moved from its original placement on the bolt and spread out on a larger portion of the bolt. The patch will thus increase the torque needed to thread the bolt to the nut or "steal torque" from the tool applying the torque to the bolted joint.

In a point P3' the torque decreases slightly before starting to increase once more in point P4'. After point P4' and before point P5' a linear torque increase occurs due to increased axial forces and friction between the thread of the nut and the bolt. At point P5', the yield point, the bolt will start to plastically deform and the torque start to flatten out. Between point P5' and a point P6' only minor change in torque occurs.

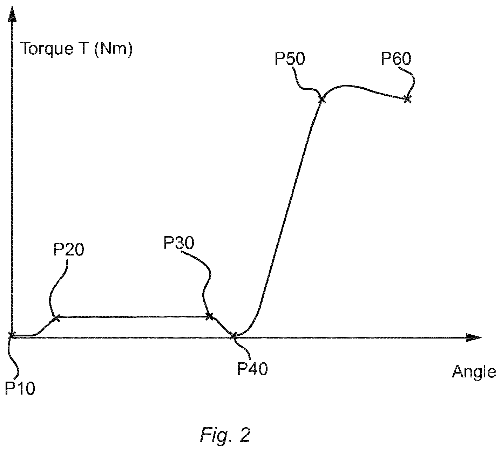

Fig. 2 shows a schematic graph for the torque T as a function of rotation angle α, when treading a nut to a bolt comprising a mechanical threading indicating element according to at least one embodiment of the present invention. The bolt enters the nut in a point P10 in the chart, the point being arranged in the chart origin. After the nut is threaded onto the bolt and is determined to be in threaded engagement for about 2-3 full thread turns, and a thread on the nut is in threaded engagement with the mechanical threading indicating element on the bolt, a torque increase will occur. The torque will continue to increase until the mechanical threading indicating element is in full engagement with the threads of the nut. This is shown in the chart in point P20 where the torque value flattens out into a constant torque value. From P20 an approximately constant torque is needed to thread the bolt to the nut. Point P20 may thus be used for controlling or measuring and angle from. The approximately constant torque value needed depends on the type and dimensions of the mechanical threading indicating element of the bolt.

After being constant between point P20 and a point P30 the torque is decreased due to the mechanical threading indicating element leaving the nut or coming out of contact with the nut. Since the mechanical threading indicating element is arranged on a small portion of the bolt the decrease of torque is sudden, or almost instant, and occurs during a small angular range. When the nut is threaded completely past the mechanical threading indicating element the torque needed to thread the bolt onto the nut will be low or approximately 0 Nm. Hence, contrary to using a thread locking patch the mechanical threading indicating element will not "steal torque" from the tool applying the torque to the bolted joint when the mechanical threading indicating element is threaded past the nut. Further, the mechanical threading indicating element is fixed in position on the bolt and does not move or smear like a patch.

In a point P40 the linear torque has decreased and is approximately 0 Nm. From point P40 the torque will start to increase. However, and depending on the design of the bolt, after the decrease in torque from point P30 to point P40 the torque may remain constant and approximately 0 Nm for an angle until the bolt and nut fit snuggly. Between the point P40 and a point P60 the bolt will function as a normal bolt. This may be seen when comparing the torque curve shape between points P3 to P6 of Fig. 1 and points P40 to P60 in Fig. 2.

The length of the phase P20 to P30 of the curve in Fig. 2 may be altered depending on the mechanical threading indicating element of the bolt. For example if the mechanical threading indicating element of the bolt is a partly deformed thread, the length of the phase will be approximately three revolutions of the bolt/nut, e.g. 1080°. As a comparison a patch will affect the torque for more than 1080°.

Ideally point P20, the first torque increase, is used for counting or measuring an angle from however, additionally or alternatively point P30 may be used for the counting or measuring the angle from.

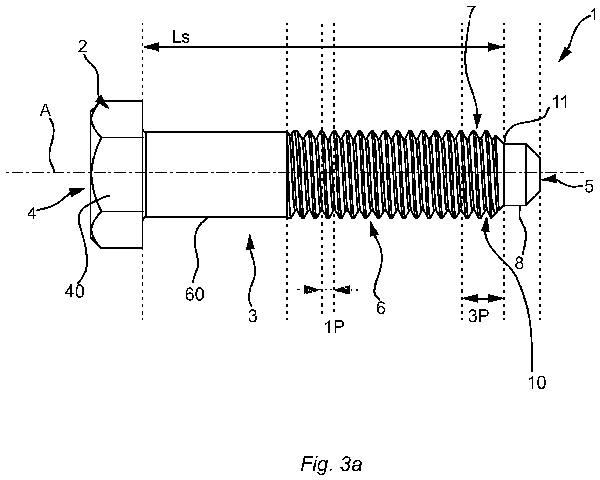

Fig. 3a shows a bolt 1 comprising a mechanical threading indicating element. The bolt 1 comprises a head 2 and a shank 3. The head 2 comprises a tool engaging interface 40 in the form of a hexagonal head. However, other tool engaging interfaces are equally usable such as torx, Phillips or Allen. The head 2 of the bolt defines a trailing end 4 of the bolt 1. At the opposite end of the bolt is the leading end 5. The shank has a cylindrical shape revolving around an axis A and extends from the head for a length Ls. The length Ls is a design parameter and may vary depending on the intended use for the bolt 1.

The shank 3 comprises a threaded trailing portion 6 and a threaded leading portion 7. The threaded trailing portion 6 is arranged between the threaded leading portion 7 and the head 2 of the bolt 1 and comprises a thread pitch 1P. The threaded leading portion 7 is arranged adjacent the leading end 5 of the bolt 1. The threaded leading portion 7 comprises a thread start 11 defining a starting point 11 of the thread of the threaded leading portion 7, being arranged adjacent the leading end 5 of the bolt 1. The threaded trailing portion 6 of may be threaded all the way up to the head 3 of the bolt 1 or there may be a non-threaded portion 60 between the threaded trailing portion 6 and the head 3 of the bolt 1. The threaded leading portion 7 comprises a mechanical threading indicating element 10 in the form of an altered thread pitch compared to the thread pitch 1P of the threaded trailing portion 6. The altered thread pitch is adapted to alter the fit between the bolt 1 and a nut being threaded onto the threaded leading portion 7. The result is that the fit will be slightly off with increased interference between the threads of the bolt 1 and a nut. This will result in larger frictional forces that need to be overcome by the applied tool torque in order for the nut to be threaded onto the bolt 1. Hence when the nut is threaded onto the bolt the increased torque is detectable and a point for counting or measuring an angle from may be determined. Only minor change to the thread pitch may be needed in order to increase the frictional forces between the threads.

The threaded leading portion 7 is arranged such that the axial length of the threaded leading portion 7 is three times 3P the thread pitch of the threaded trailing portion 6. A rule of thumb when dimensioning bolted joints is that the first three thread turns of a bolt are not to be loaded when the bolted joint is assembled. Hence, when arranging the mechanical threading indicating element 10, in the form of an altered thread pitch 10, the threading indicating application does not void or alter the structural integrity of the bolt 1.

Arranged adjacent the threaded leading portion 7 on the leading end 5 of the bolt 1 is an extended unthreaded end 8. The extended unthreaded end 8 may help guide the bolt 1 into a threaded hole or nut when assembling a bolted joint comprising said bolt 1 and a matching nut or threaded hole.

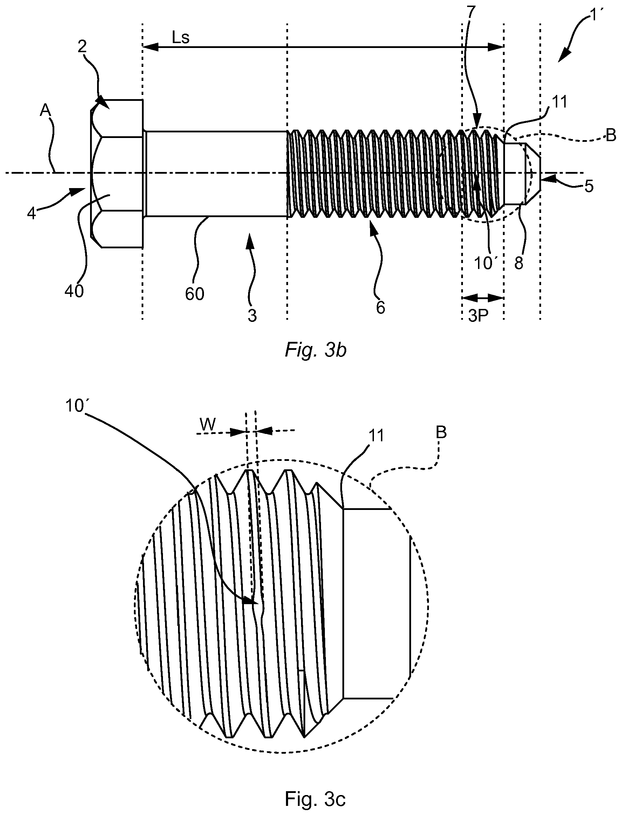

Fig. 3b shows a bolt 1' comprising a mechanical threading indicating element 10' in the form of an at least partly deformed thread, or threads. The bolt 1' shown in Fig. 3b shares in most parts structural elements with the bolt 1 discussed in relation to Fig. 3a. However, the mechanical threading indicating element of the bolt in Fig. 3a has in Fig. 3b is replaced with an at least partly deformed thread or threads 10'. When a nut is threaded onto the bolt 1' and is in contact with the deformed thread 10' the result is an increased frictional force between the deformed thread 10' and the thread of the nut. In order to detect the increased torque needed to thread the nut to the bolt only a minor thread deformation may be needed. Fig. 3c shows an enlarged view B of the deformed thread 10'. The deformed thread 10' is shown having a width W being larger than the width of the adjacent threads of the threaded leading portion 7. Further the deformation may only be arranged to a part of a thread turn as shown in Fig. 3c or to a complete thread turn. The thread deformation 10' shown in Fig. 3b and Fig. 3c is in the shape of a punch mark to a thread crest.

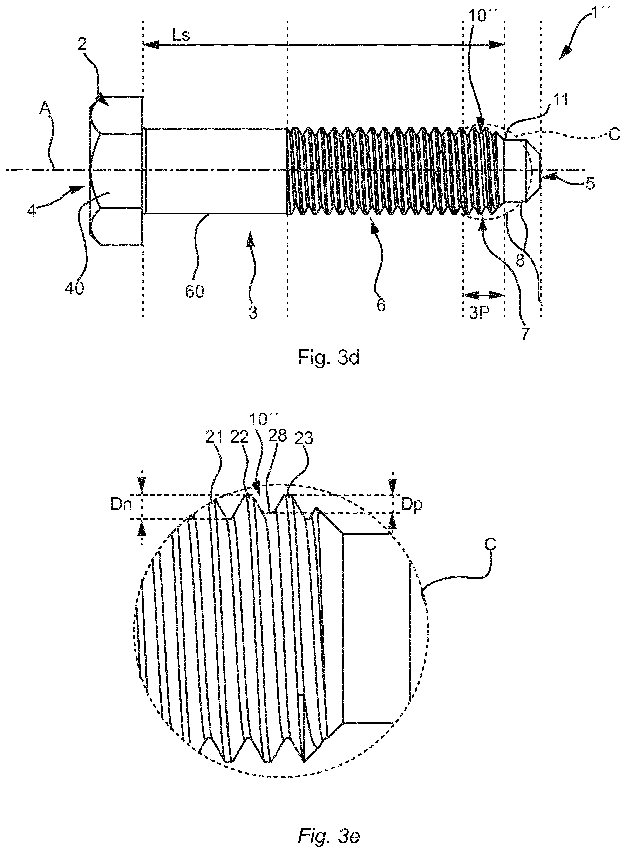

Fig. 3d shows a bolt 1" comprising a mechanical threading indicating element 10" in the form of an altered thread depth Dp, or thread height, according to the invention (See detailed view in Fig. 3c). The bolt shares most structural elements with the bolts shown in Fig. 3a-3c however the mechanical threading indicating element is in Fig. 3d - Fig. 3e in the form of an altered thread depth Dp of at least a portion of a thread turn or revolution. An enlarged view of the area C in Fig. 3d is shown in Fig. 3e. Fig. 3e shows a partial view of three threads 21-23, where the root 28 between the two threads 22, 23 has be changed such that the thread depth Dp is smaller than the normal thread depth Dn between two adjacent thread roots 21, 22. When a nut is being threaded onto the bolt 1" the altered thread depth Dp will result in the interference between the altered thread root 28 of the bolt 1" and the nut, thus increasing frictional forces between the nut and the bolt. Thus, increasing the tool torque needed to assemble the bolted joint. Hence the altered thread root 28, or thread depth Dp between the threads 22, 23 may be used as a mechanical threading indicating element 10".

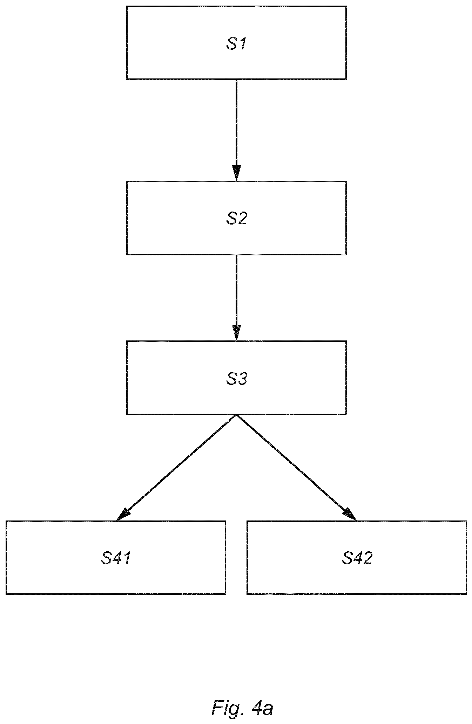

Fig. 4a shows a flow chart of a method for assembling a bolted joint, comprising a nut and a bolt 1, 1', 1 " wherein the bolt 1, 1', 1 " comprises a mechanical threading indicating element 10, 10',10".

In a first step S1, a change in run-down torque when threading a bolt 1, 1', 1" comprising the mechanical threading indicating element 10, 10',10" is detected. The change in run-down torque is due to the threads of the nut being in threaded contact with the mechanical threading indicating element 10, 10',10" of the bolt 1, 1', 1 ". When a nut is being threaded onto a bolt 1, 1', 1" a run-down torque is needed in order to overcome the frictional forces between the threads of the nut and the bolt 1, 1', 1 ". Normally when the threads are clean and lubricated the run-down torque is low or approximately 0 Nm. However, when due to the mechanical threading indicating element 10, 10',10" the run-down torque will change when the mechanical threading indicating element 10, 10',10" comes into contact, or comes out of contact, with the threads of a nut being threaded onto the bolt 1, 1', 1". A change in run-down torque being above a predetermined torque threshold is indicative of that the mechanical threading indicating element 10, 10',10" is in contact with the threads of the nut.

In a step S2, and based on the detected run-down torque change a starting point for counting or measuring an angle α from is determined. A device for measuring the rotation of the tool driving the bolt may be used for continuously measuring the rotation angle of the tool. In addition the tool may measure the torque applied to the bolt. When a torque increase above a threshold is detected, the angle from which to count or measure may be determined in an almost instantaneous manner.

In a step S3, the bolted joint is assembled by applying a torque to the bolted joint. The step of assembling the bolted joint is performed by either performing a method step A or B, referred to as step S41 or S42 in Fig. 4a. In step S41, the nut is torqued to the bolt, or vice versa, until the measured angle α is within an angle range. The angle range is predetermined and configured based on the load/clamping force and design of the bolt and the bolted joint. When the bolted joint has been assembled and is determined to

be within the predetermined angle range the bolted joint may be determined to be securely assembled. In a step S42, the nut and bolt are torqued by an applied tool torque until the torque is above a predetermined torque threshold value and the measured angle is within an angle range. Hence, both the torque and the measured angle are used for determining that the bolted joint is securely assembled, and if one of the two is not within its specified range the bolted joint may be determined to not be securely assembled. In both step S41 and step S42, the counted or measured angle being within the predetermined angle is indicative of that the bolted joint is securely assembled.

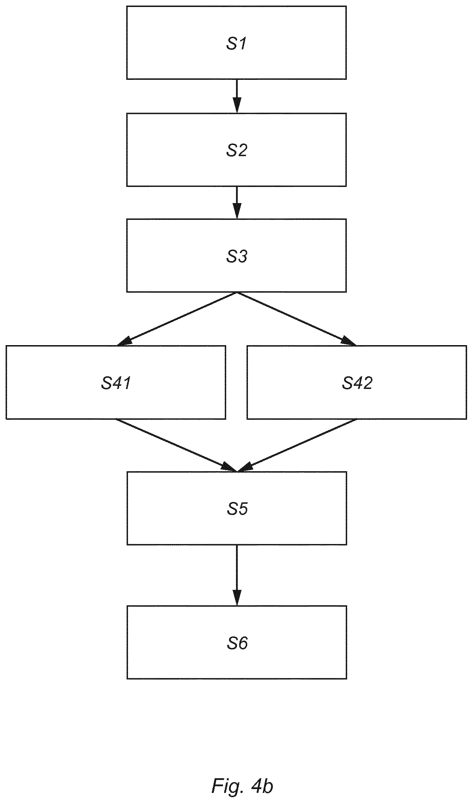

Fig. 4b shows a method for assembling a bolted joint further comprising the steps of: S5 of comparing the measured angle to the predetermined angle range. Based on the step of comparing, S5, and if the measured angle is within the predetermined angle range, the bolted joint may, in a step S6, be determined to be securely assembled. Hence, when comparing the measured angle to an angle range, the measured angle may form a control value indicative of if the bolted joint is securely assembled or not.

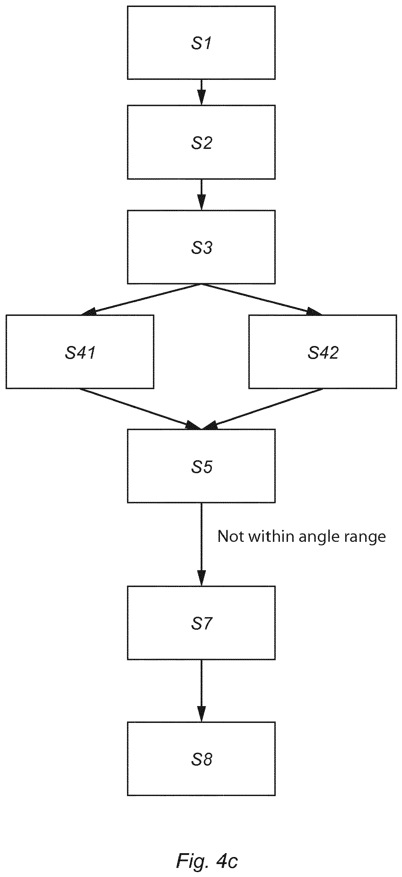

Fig.4c shows a method for assembling a bolted joint further comprising the steps of: if the measured angle is determined to not be within the predetermined angle range, determining, in a step S7, that the bolted joint is not securely assembled. In a step S8 an indication may be indicated to the operator of the torquing tool that the bolted joint is not securely assembled. Such an indication may be visual, audiotory and/or sensory. The indication may in addition also be logged to a computer.

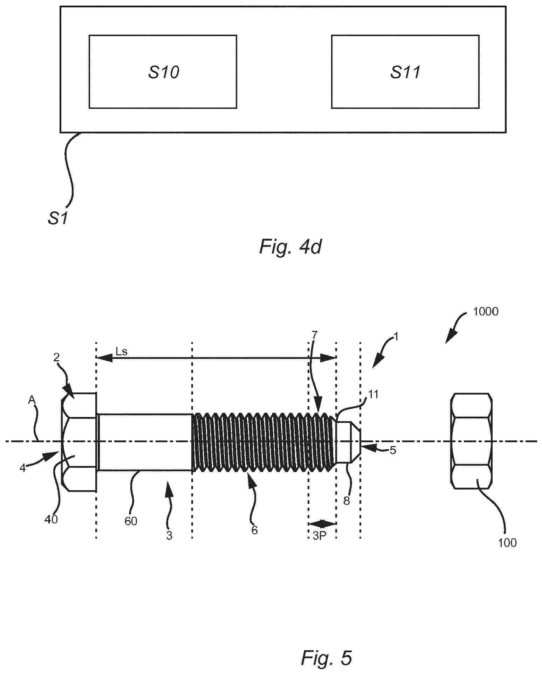

Fig. 4d shows the step S1 of detecting a change in run in torque comprises: in a step S10, detecting an increase in run-down torque resulting from the nut threadingly engaging the mechanical threading indicating element of the bolt; or in a step S11, a decrease in run-down torque resulting from the nut threadingly disengaging the mechanical threading indicating element 10, 10',10" of the bolt 1, 1', 1" when the nut is threading onto the bolt. Hence, the method may determine both the increase and the decrease in run-down torque resulting from the mechanical threading indicating element engaging and disengaging a matching threaded nut.

Fig. 5 shows a threading indicating system 1000 comprising the threaded bolt 1 shown in Fig. 3a and a matching nut 100.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A threading indicating bolt (1, 1', 1") comprising:
- a geometrical central axis (A) defining an axial direction;
- a shank (3) and a head (2), said head (2) defining a trailing end (4) and said shank (3) defining a leading end (5) of said bolt (1, 1', 1"), said shank (3) comprising a threaded trailing portion (6) having a thread pitch, and a threaded leading portion (7), said threaded leading portion (7) having a thread start (11), wherein said threaded leading portion (7) extends in said axial direction from said thread start (11) to the threaded trailing portion (6) for a length (3P) being three times the thread pitch of the threads of said trailing portion (6); and wherein a torque (T) is needed to thread a matching nut onto said bolt (1, 1 ',1 ");
said threaded leading portion (7) of said bolt (1, 1', 1") comprising a mechanical threading indicating element (10, 10', 10") adapted to increase said torque (T) needed to thread a matching nut onto said bolt (1, 1', 1") while said matching nut is in threaded engagement with the mechanical threading indicating element (10, 10', 10") arranged on said threaded leading portion (7) of said bolt (1, 1', 1"); said increase of said torque (T) being in comparison to a required run-down torque when said matching nut has been threaded onto said bolt (1, 1', 1") past said threaded leading portion (7) and onto said threaded trailing portion (6),
wherein said mechanical threading indicating element (10, 10', 10") is a change of at least one thread property of at least a portion of one thread turn of said threads of the leading portion of said bolt, **characterized in that** said change of at least one thread property is at least a thread depth, and **in that** the root of the thread at said threading indicating element (10, 10', 10") is flat.

2. A threading indicating bolt (1, 1', 1") according to claim 1, wherein said mechanical threading indicating (10, 10', 10") element further includes a partial deformation of at least a portion of at least one thread turn of said thread of said leading portion (7).

3. A threading indicating bolt (1, 1', 1") according to claim 1, wherein said change of at least one thread property further includes at least one of the following thread properties: a thread angle, a pitch, a lead, a major diameter, a minor diameter, a top radius, or a bottom radius.

4. A threading indicating bolt (1, 1', 1") according to claim 1, wherein said mechanical threading indicating element (10, 10', 10") is arranged on at least a portion of the third thread turn of said bolt (1, 1', 1") counting from said thread start (11) of said threaded leading portion (7).

5. A threading indicating bolt (1, 1', 1") according to any one of the claims 1-4, wherein said mechanical threading indicating element (10, 10', 10") comprises an altered thread pitch of at least a portion of the threads of the leading portion (7).

6. A threading indicating system (1000) comprising a threaded bolt (1, 1', 1") according to any one of the claims 1-5, and a matching threaded nut, said system **characterized in that:**
- a first torque is required when said nut is threading onto said threaded trailing portion (6); and
said mechanical threading indicating element (10, 10', 10") is a torque increasing element; and wherein a second torque is required when said nut is threading onto said threaded leading portion (7) of said bolt (1, 1', 1") and said nut is in threaded contact with said torque increasing element (10, 10', 10"); and
wherein said second torque is larger than said first torque.

7. The threading indicating system (1000) according to claim 6, wherein said run-down torque is decreased when said nut is threaded past said leading portion (7), and is determined not to be in threaded contact with said threads of said leading portion (7) of said bolt (1, 1', 1").

8. A method for assembling a bolted joint, said bolted joint comprising a bolt (1, 1', 1") according to any one of the claims 1-5 and a matching nut, said method comprising the steps of:
- detecting a change in run-down torque when threading said bolt (1, 1', 1") to said nut, said change in run-down torque being above a predetermined threshold value and due to said mechanical threading indicating element (10, 10', 10"), wherein said step of detecting a change in run-down torque comprises detecting an increase in run-down torque resulting from said nut threadingly engaging said mechanical threading indicating element (10, 10', 10") of said bolt (1, 1', 1"), or a decrease in run-down torque resulting from said nut threadingly disengaging said mechanical threading indicating element (10, 10', 10") of said bolt (1, 1', 1"), when said nut is threading onto said bolt (1, 1', 1"),
- determining, based on the step of detecting said change in run-down torque, a starting point for measuring an angle from, said angle being the angle of rotation between said bolt (1, 1', 1") and said nut; and
- assembling said bolted joint by applying a torque and performing one of the method steps A and B:
A. torquing said nut to said bolt (1, 1', 1") until said measured angle is within an angle range; and
B. torquing said nut to said bolt (1, 1', 1") until said applied torque is above a predetermined torque threshold value and said measured angle is within an angle range;
wherein said angle being within said angle range is indicative that said bolted joint is securely assembled.

9. The method according to claim 8, further comprising the steps of:
- comparing said measured angle to said predetermined angle range, and based on said comparison and if said measured angle is within said angle range:
- determining that said bolted joint is securely assembled.

10. The method according to claim 8, further comprising the steps of: if said measured angle is determined to not be within said predetermined angle range:
- determining that said bolted joint is not securely assembled;
and
- indicating to an operator that the bolted joint is not securely assembled.

## Patentansprüche

1. Verschraubungsanzeigebolzen (1, 1', 1"), Folgendes umfassend:
- eine geometrische Mittelachse (A), die eine Axialrichtung definiert;
- einen Schaft (3) und einen Kopf (2), wobei der Kopf (2) ein hinteres Ende (4) definiert und der Schaft (3) ein vorderes Ende (5) des Bolzens (1, 1', 1") definiert, wobei der Schaft (3) einen hinteren Gewindeabschnitt (6), der eine Gewindeteilung aufweist, und einen vorderen Gewindeabschnitt (7), umfasst, wobei der vordere Gewindeabschnitt (7) einen Gewindeanfang (11) aufweist, wobei sich der vordere Gewindeabschnitt (7) über eine Länge (3P), die dem Dreifachen der Gewindeteilung des Gewindes des hinteren Abschnitts (6) entspricht, vom Gewindeanfang (11) zum hinteren Gewindeabschnitt (6) in Axialrichtung erstreckt; und wobei ein Drehmoment (T) erforderlich ist, um eine passende Mutter auf den Bolzen (1, 1', 1") zu schrauben;
wobei der vordere Gewindeabschnitt (7) des Bolzens (1, 1', 1") ein mechanisches Verschraubungsanzeigeelement (10, 10', 10") umfasst, das dazu eingerichtet ist, das Drehmoment (T), das erforderlich ist, um eine passende Mutter auf den Bolzen (1, 1', 1") zu schrauben, zu erhöhen, während sich die passende Mutter mit dem mechanischen Verschraubungsanzeigeelement (10, 10', 10"), das auf dem vorderen Gewindeabschnitt (7) des Bolzens (1, 1', 1") angeordnet ist, im Gewindeeingriff befindet; wobei die Erhöhung des Drehmoments (T) im Vergleich zu einem erforderlichen Auslaufdrehmoment, wenn die passende Mutter über den vorderen Gewindeabschnitt (7) hinaus und auf den hinteren Gewindeabschnitt (6) auf den Bolzen (1, 1', 1") geschraubt wurde, steht,
wobei das mechanische Verschraubungsanzeigeelement (10, 10', 10") eine Veränderung mindestens einer Gewindeeigenschaft mindestens eines Abschnitts einer Gewindewindung des Gewindes des vorderen Abschnitts des Bolzens ist,
**dadurch gekennzeichnet, dass** die Veränderung mindestens einer Gewindeeigenschaft mindestens eine Gewindetiefe ist, und dass die Wurzel des Gewindes an dem Verschraubungsanzeigeelement (10, 10', 10") flach ist.

2. Verschraubungsanzeigebolzen (1, 1', 1") nach Anspruch 1, wobei das mechanische Verschraubungsanzeigeelement (10, 10', 10") ferner eine Teilverformung mindestens eines Abschnitts mindestens einer Gewindewindung des Gewindes des vorderen Abschnitts (7) enthält.

3. Verschraubungsanzeigebolzen (1, 1', 1") nach Anspruch 1, wobei die Veränderung mindestens einer Gewindeeigenschaft ferner mindestens eine der folgenden Gewindeeigenschaften enthält: einen Gewindewinkel, eine Teilung, eine Steigung, einen größten Durchmesser, einen kleinsten Durchmesser, einen oberen Radius oder einen unteren Radius.

4. Verschraubungsanzeigebolzen (1, 1', 1") nach Anspruch 1, wobei das mechanische Verschraubungsanzeigeelement (10, 10', 10") zumindest auf einem Abschnitt der beginnend vom Gewindeanfang (11) des vorderen Gewindeabschnitts (7) dritten Gewindewindung des Bolzens (1, 1', 1") angeordnet ist.

5. Verschraubungsanzeigebolzen (1, 1', 1") nach einem der Ansprüche 1-4, wobei das mechanische Verschraubungsanzeigeelement (10, 10', 10") eine veränderte Gewindeteilung mindestens eines Abschnitts des Gewindes des vorderen Abschnitts (7) umfasst.

6. Verschraubungsanzeigesystem (1000), das einen Gewindebolzen (1, 1', 1") nach einem der Ansprüche 1-5 und eine passende Gewindemutter umfasst, wobei das System **dadurch gekennzeichnet ist, dass**:
- ein erstes Drehmoment erforderlich ist, wenn die Mutter auf den hinteren Gewindeabschnitt (6) geschraubt wird; und
das mechanische Verschraubungsanzeigeelement (10, 10', 10") ein Drehmomenterhöhungselement ist; und wobei ein zweites Drehmoment erforderlich ist, wenn die Mutter auf den vorderen Gewindeabschnitt (7) des Bolzens (1, 1', 1") geschraubt wird und die Mutter mit dem Drehmomenterhöhungselement (10, 10', 10") verschraubt ist; und wobei das zweite Drehmoment größer als das erste Drehmoment ist.

7. Verschraubungsanzeigesystem (1000) nach Anspruch 6, wobei das Auslaufdrehmoment verringert wird, wenn die Mutter an dem vorderen Abschnitt (7) vorbei geschraubt wird, und bestimmt wird, dass sie nicht mit dem Gewinde des vorderen Abschnitts (7) des Bolzens (1, 1', 1") verschraubt ist.

8. Verfahren zur Montage einer Schraubverbindung, wobei die Schraubverbindung einen Bolzen (1, 1', 1") nach einem der Ansprüche 1-5 und eine passende Mutter umfasst, wobei das Verfahren die folgenden Schritte umfasst:
- Erfassen einer Veränderung des Auslaufdrehmoments, wenn der Bolzen (1, 1', 1") in die Mutter geschraubt wird, wobei die Veränderung des Auslaufdrehmoments über einem festgelegten Schwellenwert liegt und auf dem mechanischen Verschraubungsanzeigeelement (10, 10', 10") beruht, wobei der Schritt des Erfassens einer Veränderung des Auslaufdrehmoments das Erfassen eines Anstiegs des Auslaufdrehmoments aufgrund des Verschraubungseingriffs der Mutter in das mechanische Verschraubungsanzeigeelement (10, 10', 10") des Bolzens (1, 1', 1") oder einer Abnahme des Auslaufdrehmoments aufgrund des Lösens der Verschraubung der Mutter von dem mechanischen Verschraubungsanzeigeelement (10, 10', 10") des Bolzens (1, 1', 1") umfasst, wenn die Mutter auf den Bolzen (1, 1', 1") geschraubt wird,
- Bestimmen eines Ausgangspunkts zum Messen eines Winkels auf Grundlage des Schritts des Erfassens der Veränderung des Auslaufdrehmoments, wobei der Winkel der Drehwinkel zwischen dem Bolzen (1, 1', 1") und der Mutter ist; und
- Montieren der Schraubverbindung durch Aufbringen eines Drehmoments und Durchführen eines der Verfahrensschritte A oder B:
A. Anziehen der Mutter auf dem Bolzen (1, 1', 1"), bis der gemessene Winkel innerhalb eines Winkelbereichs liegt; und
B. Anziehen der Mutter auf dem Bolzen (1, 1', 1"), bis das aufgewendete Drehmoment über einem festgelegten Drehmomentschwellenwert liegt und der gemessene Winkel innerhalb eines Winkelbereichs liegt; wobei die Tatsache, dass sich der Winkel innerhalb des Winkelbereichs befindet, anzeigt, dass die Schraubverbindung sicher montiert ist.

9. Verfahren nach Anspruch 8, ferner die folgenden Schritte umfassend:
- Vergleichen des gemessenen Winkels mit dem festgelegten Winkelbereich und auf Grundlage des Vergleichs und, wenn sich der gemessene Winkel innerhalb des Winkelbereichs befindet:
- Bestimmen, dass die Schraubverbindung sicher montiert ist.

10. Verfahren nach Anspruch 8, ferner die folgenden Schritte umfassend:
wenn bestimmt wird, dass sich der gemessene Winkel nicht innerhalb des festgelegten Winkelbereichs befindet:
- Bestimmen, dass die Schraubverbindung nicht sicher montiert ist; und
- einem Bediener Anzeigen, dass die Schraubverbindung nicht sicher montiert ist.

## Revendications

1. Boulon à indication de filetage (1, 1', 1") comprenant :
- un axe géométrique central (A) définissant une direction axiale ;
- une tige (3) et une tête (2), ladite tête (2) définissant une extrémité arrière (4) et ladite tige (3) définissant une extrémité avant (5) dudit boulon (1, 1', 1"), ladite tige (3) comprenant une portion arrière filetée (6) ayant un pas de filetage, et une portion avant filetée (7), ladite portion avant filetée (7) ayant un début de filetage (11), ladite portion avant filetée (7) s'étendant dans ladite direction axiale depuis ledit début de filetage (11) jusqu'à la portion arrière filetée (6) sur une longueur (3P) qui vaut trois fois le pas de filetage des filetages de ladite portion arrière (6) ; et un couple (T) étant nécessaire pour visser un écrou correspondant sur ledit boulon (1, 1', 1") ;
ladite portion avant filetée (7) dudit boulon (1, 1', 1") comprenant un élément à indication de filetage mécanique (10, 10', 10") prévu pour augmenter ledit couple (T) nécessaire pour visser un écrou correspondant sur ledit boulon (1, 1', 1") pendant que ledit écrou correspondant est en prise filetée avec l'élément à indication de filetage mécanique (10, 10', 10") prévu sur ladite portion avant filetée (7) dudit boulon (1, 1', 1"); ladite augmentation dudit couple (T) se faisant par comparaison avec un couple de réduction requis lorsque ledit écrou correspondant a été vissé sur ledit boulon (1, 1', 1") au-delà de ladite portion avant filetée (7) et sur ladite portion arrière filetée (6), ledit élément à indication de filetage mécanique (10, 10', 10") étant un changement d'au moins une propriété de filetage d'au moins une portion d'un tour de filet desdits filetages de la portion avant dudit boulon,
**caractérisé en ce que**
ledit changement d'au moins une propriété de filetage est au moins une profondeur de filet, et **en ce que** la base du filetage au niveau dudit élément à indication de filetage (10, 10', 10") est plate.

2. Boulon à indication de filetage (1, 1', 1") selon la revendication 1, dans lequel ledit élément à indication de filetage mécanique (10, 10', 10") comporte en outre une déformation partielle d'au moins une portion d'au moins un tour de filet dudit filetage de ladite portion avant (7).

3. Boulon à indication de filetage (1, 1', 1") selon la revendication 1, dans lequel ledit changement d'au moins une propriété de filetage comporte en outre au moins l'une des propriétés de filetage suivantes : un angle de filetage, un pas, une entrée de filetage, un grand diamètre, un petit diamètre, un rayon supérieur ou un rayon inférieur.

4. Boulon à indication de filetage (1, 1', 1") selon la revendication 1, dans lequel ledit élément à indication de filetage mécanique (10, 10', 10") est disposé sur au moins une portion du troisième tour de filet dudit boulon (1, 1', 1"), en comptant à partir dudit début de filetage (11) de ladite portion avant filetée (7).

5. Boulon à indication de filetage (1, 1', 1") selon l'une quelconque des revendications 1 à 4, dans lequel ledit élément à indication de filetage mécanique (10, 10', 10") comprend un pas de filetage modifié d'au moins une portion des filets de la portion avant (7).

6. Système à indication de filetage (1000) comprenant un boulon fileté (1, 1', 1") selon l'une quelconque des revendications 1 à 5, et un écrou fileté correspondant, ledit système étant **caractérisé en ce que :**
- un premier couple est requis lorsque ledit écrou est vissé sur ladite portion arrière filetée (6) ; et
- ledit élément à indication de filetage mécanique (10, 10', 10") est un élément augmentant le couple ; et un deuxième couple étant requis lorsque ledit écrou est vissé sur ladite portion avant filetée (7) dudit boulon (1, 1', 1") et que ledit écrou est en contact fileté avec ledit élément augmentant le couple (10, 10', 10") ; et
ledit deuxième couple étant plus grand que ledit premier couple.

7. Système à indication de filetage (1000) selon la revendication 6, dans lequel ledit couple de réduction est diminué lorsque ledit écrou est vissé au-delà de ladite portion avant (7) et est déterminé comme n'étant pas en contact de vissage avec lesdits filets de ladite portion avant (7) dudit boulon (1, 1', 1").

8. Procédé pour assembler un joint boulonné, ledit joint boulonné comprenant un boulon (1, 1', 1") selon l'une quelconque des revendications 1 à 5 et un écrou correspondant, ledit procédé comprenant les étapes suivantes :
- détecter un changement de couple de réduction lors du vissage dudit boulon (1, 1', 1") sur ledit écrou, ledit changement de couple de réduction étant au-dessus d'une valeur seuil prédéterminée et, du fait dudit élément à indication de filetage mécanique (10, 10', 10"), ladite étape de détection d'un changement de couple de réduction comprenant la détection d'une augmentation de couple de réduction résultant de l'engagement par filetage dudit écrou avec ledit élément à indication de filetage mécanique (10, 10', 10") dudit boulon (1, 1', 1"), ou une diminution de couple de réduction résultant du désengagement par filetage dudit écrou avec ledit élément à indication de filetage mécanique (10, 10', 10") dudit boulon (1, 1', 1") lorsque ledit écrou est vissé sur ledit boulon (1, 1', 1"),
- déterminer, sur la base de l'étape de détection dudit changement de couple de réduction, un point de départ pour mesurer un angle, ledit angle étant l'angle de rotation entre ledit boulon (1, 1', 1") et ledit écrou ; et
- assembler ledit joint boulonné en appliquant un couple et en effectuant l'une des étapes de procédé A et B suivantes :
A. visser ledit écrou sur ledit boulon (1, 1', 1") jusqu'à ce que ledit angle mesuré soit à l'intérieur d'une plage angulaire ; et
B. visser ledit écrou sur ledit boulon (1, 1', 1") jusqu'à ce que ledit couple appliqué soit au-dessus d'une valeur seuil de couple prédéterminée et que ledit angle mesuré soit à l'intérieur d'une plage angulaire ; le fait que ledit angle soit à l'intérieur de ladite plage angulaire indiquant que ledit joint boulonné est assemblé de manière sécurisée.

9. Procédé selon la revendication 8, comprenant en outre les étapes suivantes :
- comparer ledit angle mesuré avec ladite plage angulaire prédéterminée, et, sur la base de ladite comparaison, et si ledit angle mesuré est à l'intérieur de ladite plage angulaire :
- déterminer que ledit joint boulonné est assemblé de manière sécurisée.

10. Procédé selon la revendication 8, comprenant en outre les étapes suivantes : si ledit angle mesuré est déterminé comme n'étant pas à l'intérieur de ladite plage angulaire prédéterminée :
- déterminer que ledit joint boulonné n'est pas assemblé de manière sécurisée ; et
- indiquer à un opérateur que le joint boulonné n'est pas assemblé de manière sécurisée.
